# EUROPEAN PATENT APPLICATION

(11) **EP 1 916 658 A1**
(43) Date of publication of application: **30.04.2008**
(21) Application number: 06781436.8
(22) Date of filing: 21.07.2006
(51) Int. Cl.: G11B 17/051

(54) **OPTICAL DISK DEVICE**

(30) Priority: 19.08.2005 JP 2005238789
(71) Applicant: MATSUSHITA ELECTRIC INDUSTRIAL CO., LTD., Osaka 571-8501 (JP)
(72) Inventor: YAMAGUCHI, Yuji c/o Matsushita Electr.Ind., Chuo-ku, Osaka-shi, Osaka 540-6207 (JP); OYOKAWA, Minoru c/o Matsushita Electr.Ind., Chuo-ku. Osaka-shi, Osaka 540-6207 (JP); OHMURA, Yoshikazu c/o Matsushita Electr.Ind., Chuo-ku, Osaka-shi, Osaka 540-6207 (JP)
(74) Representative: Pautex Schneider, Nicole Véronique
(86) International application number: PCT/JP2006/314514
(87) International publication number: WO 2007/020771

(57) **Abstract**

An optical disc device capable of removing an optical disc not to damage an optical disc and an optical disc device even if two piled optical discs are inserted into the optical disc device is provided. Even if two piled optical discs 12 are pushed forcibly into the optical disc device, the insertion of two piled optical discs 12 can be prevented with the cooperation of the fixed guiding portion 41 and the thickness restricting member 43. Since the thickness restricting member is turned in the ejecting direction when two piled optical discs are pulled out, two piled optical discs 12 can be taken out easily not to damage the optical disc 12 and the optical disc device 10.

## Description

### Technical Field

The present invention relates to an optical disc device equipped with a mechanism for preventing such a situation that two piled optical discs are inserted into the optical disc device, i.e., a mechanism for preventing the insertion of double optical discs.

### Background Art

In the prior art, in the optical disc device such as the onboard audio equipment having an optical disc discriminating device, or the like, the mechanism for preventing the insertion of plural sheets of optical discs is provided not to damage the optical disc device or the optical disc when plural sheets of optical discs are stacked and inserted (see Patent Literature 1, for example).
More particularly, as shown in FIG.8, in an optical disc device 100 set forth in Patent Literature 1, upper guides 103, 104, 105 are provided to the upper center, left, and right portions of an opening portion 102 in a main body 101 and also a lower guide 106 having a graduation that is lowered toward the center is provided to the lower portion. Also, an interval between the upper guides 103,104, 105 and the lower guide 106 is set smaller than a thickness of two sheets of optical discs 107. Thus, such a situation can be prevented that two piled optical discs 107 are inserted into the optical disc device.
Patent Literature 1: JP-A-2001-312850 (Fig.7)

### Disclosure of the Invention

### Problems that the Invention is to Solve

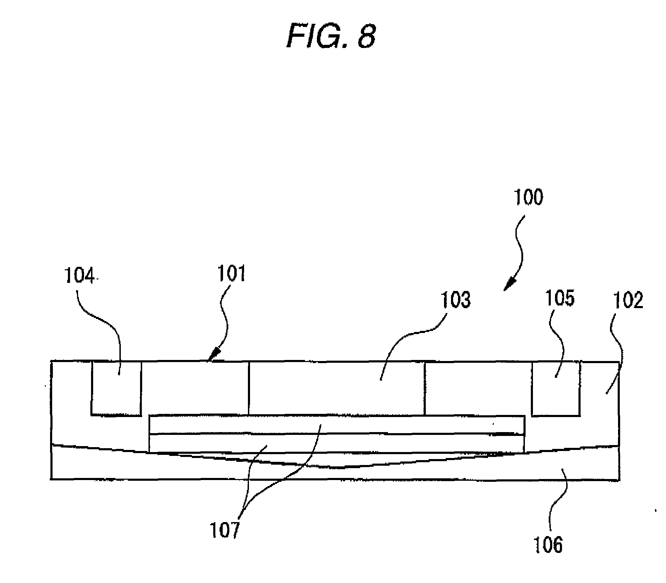

However, as shown in FIG.8, when two piled optical discs 107 are inserted forcibly into the optical disc device 100, the optical disc 107 is put between the upper guide 103 and the lower guide 106 so that the optical disc 107 cuts into the upper guide 103 and the lower guide 106. Thus, when the optical discs 107 are pulled out, this optical disc device need very large force to pull out the optical discs 107 and the optical disc device may have a disadvantage that the optical disc 107 is damaged or the optical disc device 100 is injured.

The present invention has been made in view of the above problem, and it is an object of the present invention to provide an optical disc device capable of removing an optical disc not to damage the optical disc and the optical disc device even if two piled optical discs are inserted into the optical disc device.

### Means for Solving the Problems

In order to attain the foregoing object, an optical disc device according to the present invention, includes a fixed guiding portion which guides one surface of an inserted optical disc; and a thickness restricting member which is opposed to the fixed guiding portion to form an optical disc inserting path whose thickness between the fixed guiding portion and the thickness restricting member is smaller than a thickness of two sheets of the optical disc; wherein the thickness restricting member is turned in a direction in which the optical disc is ejected.

In the optical disc device constructed in this manner, even if two piled optical discs are pushed forcibly into the optical disc device, the insertion of two piled optical discs can be prevented with the cooperation of the fixed guiding portion and the thickness restricting member. Also, since the thickness restricting member is turned in the ejecting direction when two piled optical discs are pulled out, two piled optical discs can be taken out easily not to damage the optical disc and the optical disc device.

Also, in the optical disc device according to the present invention, the thickness restricting member is provided to both end portions which are positioned on an inner side of the optical disc device and correspond to an outer peripheral position of the optical disc.

In the optical disc device constructed in this manner, the thickness restricting member is provided to both end portions of the optical disc slot corresponding to the outer peripheral position of the optical disc, just on the inner side of the optical disc slot. Therefore, the optical disc can be taken out easily without damage of the data recording portion in the optical disc.

Also, the optical disc device according to the present invention further includes a resilient member which energizes the thickness restricting member in an insertion direction of the optical disc; and a stopper which restricts a movement of the thickness restricting member in the insertion direction of the optical disc.

In the optical disc device constructed in this manner, the thickness restricting member is always energized in the inserting direction of the optical disc to contact the stopper, and is positioned in a two-piled disc detecting position. Therefore, the insertion of two piled optical discs can be prevented without fail, and also the optical disc can be taken out easily because the turning of the thickness restricting member is allowed when the optical disc is pulled out.

### Advantages of the Invention

According to the present invention, even if two piled optical discs are pushed forcibly into the optical disc device, the insertion of two piled optical discs can be prevented with the cooperation of the fixed guiding portion and the thickness restricting member. Also, such an advantage can be achieved that, since the thickness restricting member is turned in the ejecting direction when two piled optical discs are pulled out, two piled optical discs can be taken out easily not to damage the optical disc and the optical disc device.

### Brief Description of the Drawings

**FIG.1** is a general perspective view of a car audio system in which an optical disc device of an embodiment of the present invention is built;
FIG.2 is a plan view showing an optical disc device of the embodiment of the present invention when taken in an II-II position in FIG.1;
FIG.3 is a front view of the optical disc device of the embodiment of the present invention, from which a front panel is removed;
FIG.4 is a sectional view showing a situation that two piled optical discs are detected by a two piled optical discs detecting mechanism in the embodiment of the present invention when taken in a IV-IV position in FIG.3;
FIG.5 is a sectional view showing a situation that two piled optical discs are pulled out from a main body in the embodiment of the present invention when taken in a V-V position in FIG,3;
FIG.6 is a front view of the two piled optical discs detecting mechanism in the embodiment of the present invention;
FIG.7(A) is a major sectional view showing another embodiment different from the embodiment of the present invention, and FIG.7(B) is a major plan view showing another embodiment different from the embodiment of the present invention;
FIG,8 is a sectional view showing an optical disc device in the prior art.

### Description of Reference Numerals and Signs

- 10: optical disc device
- 11: optical disc slot
- 12: optical disc
- 13: main body
- 20: tray
- 41: fixed guiding portion
- 42: optical disc inserting path
- 43: thickness restricting member
- 44: spring (resilient member)
- 45: stopper

### Best Mode for Carrying Out the Invention

An embodiment according to the present invention will be explained in detail with reference to the drawings hereinafter.

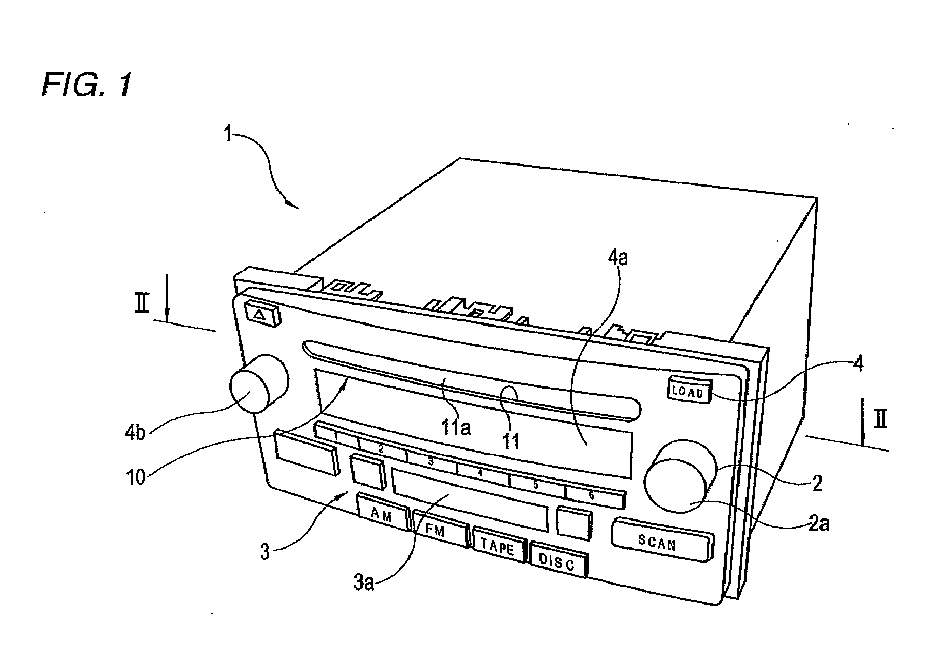

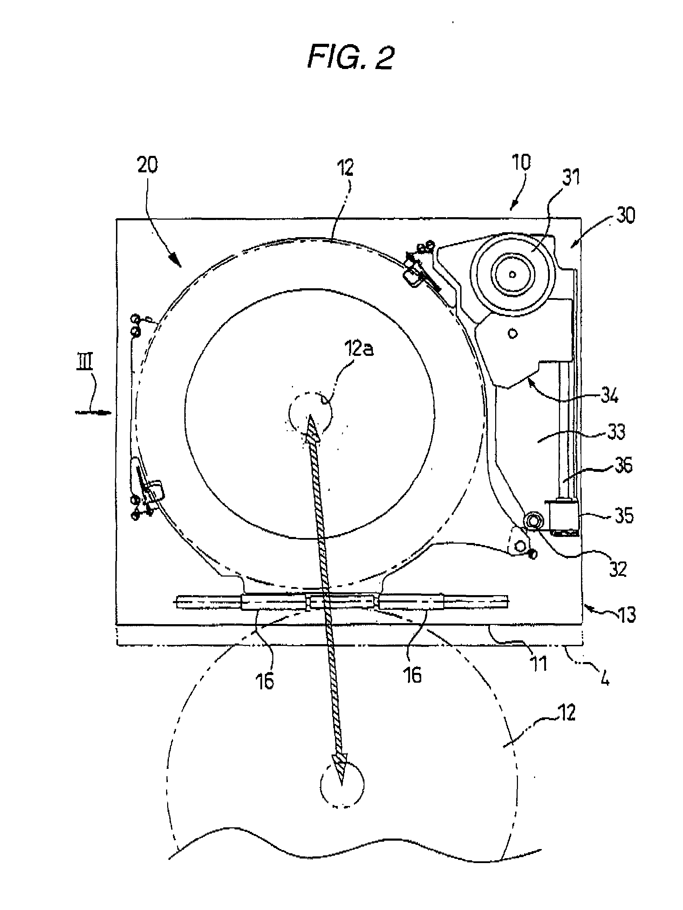

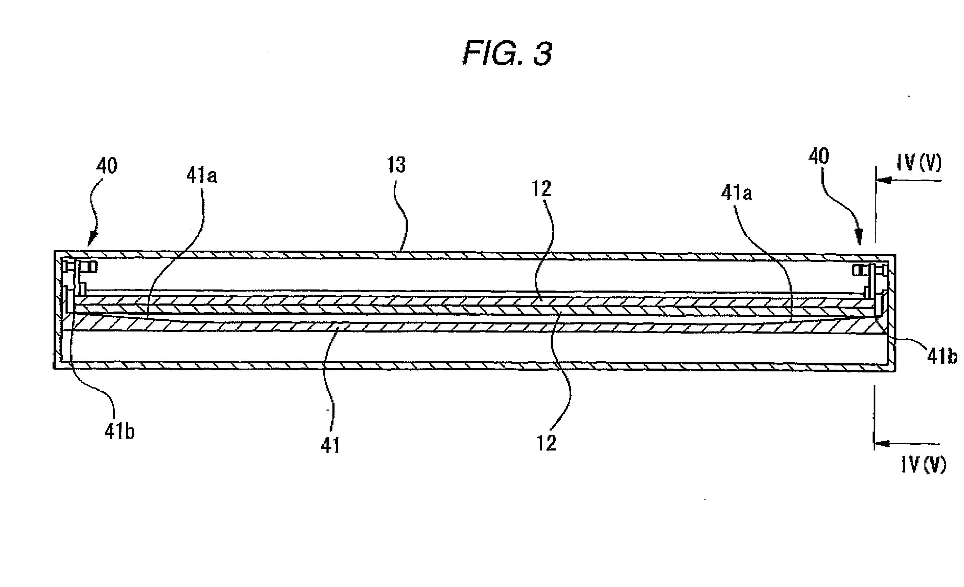

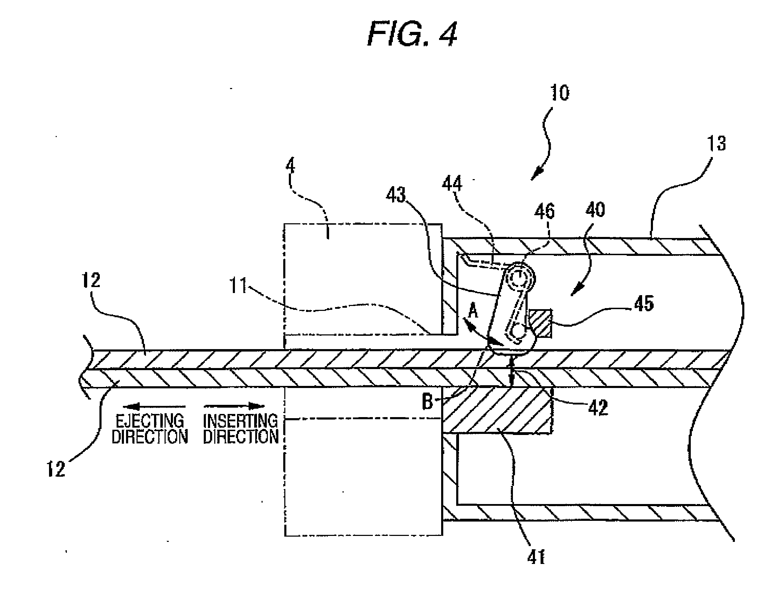

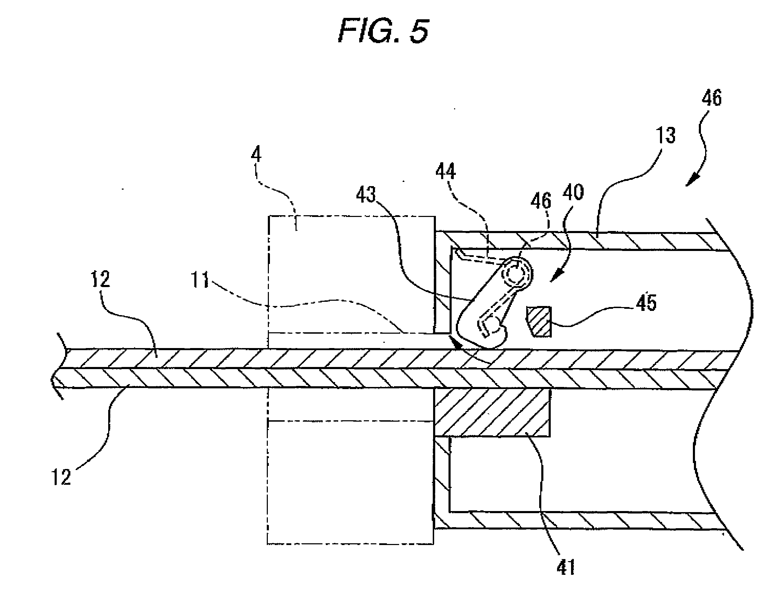

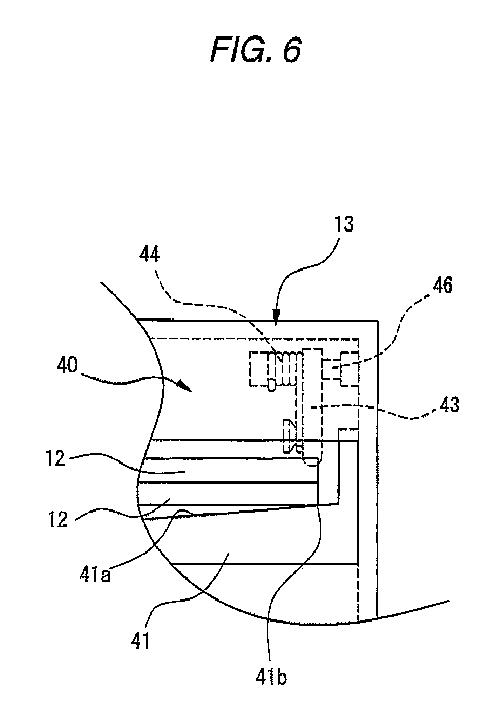

FIG.1 is a general perspective view of a car audio system in which an optical disc device of an embodiment of the present invention is built, FIG.2 is a plan view showing an optical disc device of the embodiment of the present invention when taken in a II-II position in FIG.1, FIG.3 is a front view of the optical disc device, from which a front panel is removed, of the embodiment of the present invention, FIG.4 is a sectional view showing a situation that two piled optical discs are detected by a two piled optical discs detecting mechanism in the embodiment of the present invention when taken in a IV-IV position in FiG.3, FIG.5 is a sectional view showing a situation that two piled optical discs are pulled out from a main body in the embodiment of the present invention when taken in a V-V position in FIG.3, and FIG.6 is a front view of the two piled optical discs detecting mechanism in the embodiment of the present invention.

A radio 2, a cassette tape player 3, etc. as well as the optical disc device 10 as the optical disc device are built in the car audio equipment 1. An optical disc slot 11 for the optical disc device 10, a radio tuning knob 2a, a cassette insertion slot 3a, and the like, in addition to a display portion 4a used commonly in all functions and a power/volume knob 4b are provided at a front panel 4. Also, a controlling portion 5 for controlling the radio 2, the cassette tape player 3, the optical disc device 10, etc. is provided to the inside of the car audio equipment 1.

As shown in FIG.2, the optical disc device 10 includes a main body 13 capable of housing optical discs 12 as a plurality of optical discs therein, and a plurality of trays 20 for holding individually the optical disc 12 on the inside of this main body 13.

As shown in FIG.2, a turn arm 30 is provided at a vicinity (right side in FIG.2) of the tray 20 in the main body 13 to swing on a pivot 32, and a turntable 31 that turns while holding the optical disc 12 is provided to a top end of the turn arm 30. A pickup 34 having an optical head (not shown) is provided to a suspension chassis 33 of the turn arm 30 in such a way that this pickup 34 can move reciprocally along the direction connecting the pivot 32 and the center of the turntable 31. The pickup 34 is moved by a lead screw 36 that is rotated by a drive motor 35.
Here, carrying rollers 16 being paired vertically are provided on the inside of the main body 13 of the optical disc slot 11. The carrying rollers 16 carry in the optical disc 12 inserted into the optical disc slot 11, and eject the optical disc 12 whose recording/playing operation is completed from the optical disc slot 11.

As shown in FIG.3 to FIG.6, a two-piled disc insertion preventing mechanism 40 for preventing the two-piled disc insertion of the optical disc 12 is provided to both end portions that are positioned just on the inner side of the optical disc slot 11, which is provided to the main body 13 of the optical disc device 10, to correspond to the outer peripheral position of the optical disc 12.
More particularly, the two-piled disc insertion preventing mechanism 40 has a fixed guiding portion 41 and a thickness restricting member 43. The fixed guiding portion 41 guides one surface of the optical disc 12 inserted from the optical disc slot 11 which is provided on the front panel of the main body 13. The thickness restricting member 43 is opposed to the fixed guiding portion 41 to form an optical disc inserting path 42 between the fixed guiding portion 41 and the thickness restricting member 43. The thickness of the optical disc inserting path 42 is more than a thickness of one sheet of the optical disc 12 but below a thickness of two sheets of the optical disc 12. The thickness restricting member 43 is provided to turn around a pin 46 in the ejecting direction of the optical disc 12 (in FIG.4, the leftward direction indicated by an arrow A).

Also, as shown in FIG.3, an inclined surface 41 a is provided to the left and right end portions of the fixed guiding portion 41. An outer end portion 41b of the inclined surface 41 a is provided in vicinity of the outer periphery within the outer shape of the optical disc 12 and on the outside of a data record area of the optical disc.
As shown in FIG.4 to FIG.6, the thickness restricting member 43 is always energized by a spring 44 as a resilient member in the inserting direction of the optical disc (in FIG.4, the leftward direction indicated by an arrow B). The thickness restricting member 43 is positioned in a two-piled disc detecting position (position shown in FIG.4) when the thickness restricting member 43 comes into contact with a stopper 45. The thickness restricting member 43 is provided to oppose to the outer end portions 41 b of the fixed guiding portion 41 to form a clearance whose thickness is more than a thickness of one sheet of the optical disc 12 but below a thickness of two sheets of the optical disc 12 as the optical disc inserting path 42.

Accordingly, the case where a sheet of optical disc 12 is inserted normally from the optical disc slot 11 corresponds to the case where only the lower optical disc 12 in FIG.4 is inserted. Since a space whose thickness is in excess of a thickness of one sheet of the optical disc 12 is provided between the thickness restricting member 43 and the fixed guiding portion 41, the optical disc 12 is pulled in the inside of the optical disc device 10 by the carrying rollers 16.
In contrast, the case where the two-piled optical discs 12, 12 are inserted corresponds to the case where two sheets of piled optical discs 12, 12 in FIG.4 are inserted, Since only a space whose thickness is smaller than a thickness of two sheets of optical disc 12 is provided between the thickness restricting member 43 and the fixed guiding portion 41, the thickness restricting member 43 prevents the insertion of two piled optical disc 12.
Then, when two piled optical discs 12, 12 are pushed forcibly further from the insertion blocked condition, center portions of the optical discs 12, 12 are bent downward along the inclined surface 41a of the fixed guiding portion 41. Thus, the optical discs 12, 12 cut into the thickness restricting member 43 and the fixed guiding portion 41.

In a situation that the two-piled optical discs 12, 12 are blocked by the two-piled disc insertion preventing mechanism 40, the thickness restricting member 43 can be turned in the ejecting direction by pulling out at least the upper optical disc 12 before two sheets of optical discs 12, 12 are pulled out in the ejection direction. This is because, as shown in FIG.5, the thickness restricting member 43 can be turned in the ejecting direction (in the arrow direction in FIG.5) even though the optical discs 12, 12 cut into the thickness restricting member 43 and the fixed guiding portion 41. As a result, two sheets of optical discs 12, 12 can be released from the constraint imposed by the thickness restricting member 43 and the fixed guiding portion 41 and can be ejected.
Here, after two sheets of optical discs 12, 12 are ejected, the thickness restricting member 43 is pushed against the stopper 45 by a spring force of the spring 44. Thus, the thickness restricting member 43 is returned again to the two-piled disc detecting position to prevent the insertion of the two piled optical discs.

As described above, according to the above optical disc device 10, even if the optical discs 12, 12 are pushed forcibly into the disc device in a two-piled manner, the insertion of two piled optical discs 12, 12 can be prevented with the cooperation of the fixed guiding portion 41 and the thickness restricting member 43. That is, two piled optical discs 12, 12 are stopped in a pushed position when they are pushed strongly by the thickness restricting member 43, and thus the further insertion of the optical discs into the disc device can be prevented. In addition, the thickness restricting member 43 can be turned in the ejecting direction in pulling out two piled optical discs 12, 12 from this situation, and thus two piled optical discs 12, 12 can be taken out easily not to damage the optical discs 12, 12 and the internal device of the optical disc device 10.
Also, the thickness restricting member 43 is provided to both end portions of the optical disc slot 11, which are positioned on the inner side of the optical disc slot 19 to correspond to the outer peripheral position of the optical disc 12, to prevent the insertion of two piled optical discs 12, 12, i.e., the thickness restricting member 43 is provided to the position, which is on the outer peripheral side than the data recording area of the optical disc 12 but the inner peripheral side than the outer shape of the disc, to prevent the insertion of two piled optical discs 12, 12. Therefore, the optical disc 12 can be taken out easily in a situation that the data recording area portion of the optical disc is protected more surely.

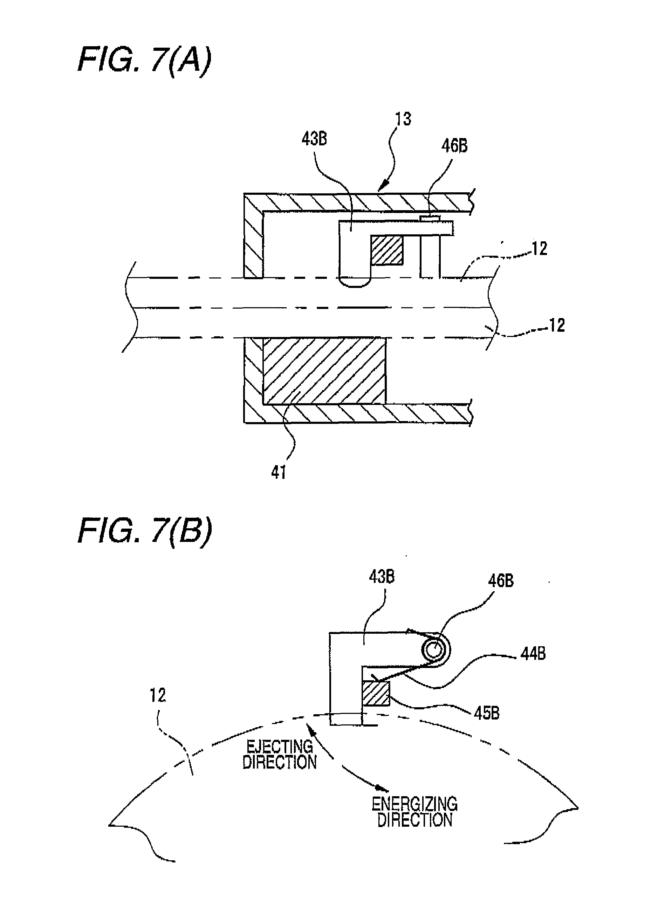

In this case, the optical disc device of the present invention is not limited to the above embodiment, and adequate variations, modifications, and the like can be applied,
For example, in the above embodiment, the thickness restricting member 43 that can be turned in the thickness direction of the optical disc 12 (the vertical direction in FIG.4) is explained. In addition, as shown in FIG.7(A) and FIG.7(B), a thickness restricting member 43B can be implemented such that the thickness restricting member 43B is turned in the outer shape direction of the optical disc (in FIG.4, outward within the horizontal plane). That is, the thickness restricting member 43B is turned horizontally around a pin 46B provided vertically in FIG.7(A), and also is always energized by a spring 44B to contact a stopper 45B. With this arrangement, like the above embodiment, the insertion of two piled optical discs can be prevented, and also two piled optical discs can be taken out easily by turning the thickness restricting member 43B when the optical disc 12 is pulled out.

This application is based upon Japanese Patent Application (Patent Application No.2005-238789) filed on August 19, 2005; the contents of which are incorporated herein by reference.

With the above, various embodiments of the resent invention are explained. But the present invention is not limited to the matters set forth in the above embodiments, and variations and modifications made by those skilled in the art based on the description of the specification and the well known technologies are acceptable to the present invention and are contained in a scope over which a protection is sought.

### Industrial Applicability

As described above, the optical disc device according to the present invention can prevent the insertion of two piled optical discs with the cooperation of the fixed guiding portion and the thickness restricting member even if two piled optical discs are pushed forcibly into the optical disc device. Also, the optical disc device according to the present invention possesses such an advantage that, since the thickness restricting member is turned in the ejecting direction when two piled optical discs are pulled out, two piled optical discs can be taken out easily not to damage the optical disc and the optical disc device, and is useful to the optical disc device having the mechanism for preventing the insertion of double optical discs into the optical disc device, or the like.

## Claims

1. An optical disc device, comprising:
a fixed guiding portion which guides one surface of an inserted optical disc; and
a thickness restricting member which is opposed to the fixed guiding portion to form an optical disc inserting path whose thickness between the fixed guiding portion and the thickness restricting member is smaller than a thickness of two sheets of the optical disc,
wherein the thickness restricting member is turned in a direction in which the optical disc is ejected.

2. The optical disc device according to claim 1, wherein the thickness restricting member is provided to both end portions which are positioned on an inner side of the optical disc device and correspond to an outer peripheral position of the optical disc.

3. The optical disc device according to claim 1, further comprising:
a resilient member which energizes the thickness restricting member in an insertion direction of the optical disc; and
a stopper which restricts a movement of the thickness restricting member in the insertion direction of the optical disc,
